# EUROPÄISCHE PATENTSCHRIFT

(11) **EP 1 206 883 B1**
(45) Veröffentlichungstag und Bekanntmachung des Hinweises auf die Patenterteilung: **11.04.2007**
(21) Anmeldenummer: 00967531.5
(22) Anmeldetag: 18.08.2000
(51) Int. Cl.: H04L 12/24

(54) **GENERISCHES ALIGNMENT-VERFAHREN IN EINER MULTI-MANAGER-UMGEBUNG**
GENERIC ALIGNMENT METHOD IN A MULTI-MANAGER ENVIRONMENT
PROCEDE D'ALIGNEMENT GENERIQUE DANS UN ENVIRONNEMENT A PLUSIEURS GESTIONNAIRES

(30) Priorität: 24.08.1999 DE 19940048
(43) Veröffentlichungstag der Anmeldung: 22.05.2002
(73) Patentinhaber: SIEMENS AKTIENGESELLSCHAFT, 80333 München (DE)
(72) Erfinder: HIRSCH, Lucian, 81373 München (DE)
(86) Internationale Anmeldenummer: PCT/DE2000/002827
(87) Internationale Veröffentlichungsnummer: WO 2001/015461

(56) Entgegenhaltungen:
- EP-A- 0 621 706
- WO-A-96/20547
- DE-A- 19 801 784
- GB-A- 2 308 777
- WU P ET AL: "ALARM CORRELATION ENGINE (ACE)" IEEE NETWORK OPERATIONS AND MANAGEMENT SYMPOSIUM,US,NEW YORK, NY: IEEE, Bd. CONF. 10, 15. Februar 1998 (1998-02-15), Seiten 733-742, XP000793420 ISBN: 0-7803-4352-2

## Beschreibung

Die Erfindung betrifft ein Verfahren und ein Kommunikationssystem zum Datenabgleich durch ein zumindest zwei Managementebenen aufweisendes Managementnetz gemäß den oberbegrifflichen Merkmalen des Anspruchs 1, wobei insbesondere für z.B. einen generischen Alarmdatenabgleich zwischen einem Agent einer Managementebene und einem Manager einer nächsthöheren Managementebene die Alarmdaten aktiver Alarme übertragen werden.

Die Prinzipien eines Managementnetzes, die auch als TMN-Prinzipien (TMN: Telecommunications Management Network) bezeichnet werden, definieren mehrere Managementebenen für das Management eines Kommunikationssystems - beispielsweise eines Mobil-Kommunikationssystems -, wobei jede Ebene eine doppelte Funktion hat. Im managenden System hat jede Ebene außer der untersten eine Manager-Funktion für die darunterliegende Ebene. Im gemanagten System hat jede Ebene außer der obersten eine Agenten-Funktion für die nächsthöhere Ebene.

Das Fehlermanagement ("Fault Management") ist z.B. ein wichtiger Teil des TMN-Managements. In der Regel spielt in diesem Fall der Agent die aktive Rolle, indem er Fehler-Ereignisse der eigenen Managementebene rechtzeitig und genau erkennt und an den Manager der nächsthöheren Ebene als Ereignisberichte bzw. sogenannte "event reports" (z.B. alarm reports) überträgt. Die Übertragung von Ereignisdaten vom Agent zum Manager ist unkritisch, solange der Kommunikationsmechanismus zwischen diesen Systemen nicht gestört ist. Wenn die Verbindung zwischen den beiden Managementebenen, also zwischen Agent und Manager, für eine bestimmte Zeit nicht mehr gewährleistet ist, muß der Agent die während dieses Intervalls aufgetretenen Ereignisse zwischenspeichern, um sicherzustellen, daß nach dem Wiederherstellen der Kommunikationsmöglichkeit dem Manager zum einen möglichst schnell eine Übersicht des aktuellen Netzzustandes - z.B. für aktive Alarme in Form einer Liste - zur Verfügung gestellt wird, und der Manager zum anderen eine möglichst lückenlose Geschichte der Ereignisse ("event history") z.B. der aktiven als auch der beendeten Alarme ("cleared alarms") aufbauen kann.

Zu diesem Zweck wird ein Datenabgleich (data realignment) zwischen Agent und Manager bei jedem neuen Verbindungsaufbau nach einem Verbindungsabbruch oder nach einer Initialisierung des Agenten oder des Managers ausgeführt. Alle Alarmdaten aktiver Alarme, zu denen Fehler im Agent noch nicht behoben sind - erkennbar daran, daß sie nicht als "cleared alarms" gekennzeichnet sind -, sind daher schnellstmöglich und vollständig der nächsthöheren Managementebene zur Verfügung zu stellen.

In der DE 197 52 614 und der DE 198 01 784 sind derartige Verfahren und Kommunikationssysteme zur Behandlung von Alarmen angegeben, die eine Basisfunktionalität für den Manager zur Anforderung aller Alarme vom Agent beschreiben. Dabei sendet der Agent die aktiven Alarme als Sequenz standardisierter M-EVENT-REPORTS, die in eine vom Manager zu Anfang initiierte M-ACTION-Request Anforderung und in eine vom Agent zum Ende initiierte M-ACTION-Response Antwort eingebettet ist. Dieses sind generische CMISE-standardisierte (Common Management Information Service Element) Prozeduren, die gemäß ITU-T X.710 definiert sind (ITU-T: International Telecommunication Union - Telecommunication sector). Die ITU-T X.733 definiert den Inhalt einer standardisierten Alarmübertragung (alarm report), die gemäß den M-EVENT-REPORT Services durchgeführt wird. Alle in Rahmen dieser M-ACTION definierten M-EVENT-REPORTS sind zu der jeweiligen Anforderung durch Verwendung von Korrelationsinformationen eindeutig korreliert. Dies erlaubt dem Manager, diese M-EVENT-REPORTS einer bestimmten Anforderung zuzuordnen und darüber hinaus von anderen, "regulären" M-EVENT-REPORTS zu unterscheiden.

Bei der DE 198 01 785 wird davon ausgegangen, daß für einen Alarmdatenabgleich zwischen einem Agent einer Managementebene und zumindest einem Manager einer nächsthöheren Managementebene die Alarmdaten aktiver Alarme übertragen werden. Darüber hinaus werden von dem Manager eine oder mehrere Anforderungsnachrichten zum Übermitteln der Alarmdaten an den Agent gesendet, sowie Korrelationsinformationen für eine Zuordnung der jeweiligen Anforderung zu den vom Agent nachfolgend gesendeten Nachrichten mit den Alarmdaten empfangen.

Dadurch, daß der Alarmdatenabgleich dort von dem Manager abhängig von zumindest einem zum Agent gesendeten Parameter gesteuert wird, ist der Alarmdatenabgleich für den Manager gegenüber der Basisfunktionalität parametrisierbar. D.h. nicht mehr alle aktiven Alarme müssen zwangsläufig vom Agent gesendet werden, sondern nur die durch den übermittelten Parameter näher definierten. Damit ergibt sich für den Manager eine Auswahlfunktion für eine Teilmenge aus allen Alarmen. Dabei werden standardisierte Nachrichten verwendet.

Mit dieser Vorgehensweise kann der Manager die im Hinblick auf die Funktionalität besonders kritischen und damit für ihn wichtigen Alarme gezielt abrufen, und dabei die Schnittstelle zum Agent durch den nur auf bestimmte Alarme eingeschränkten Informationsfluß gegenüber dem herkömmlichen Verfahren der automatischen Meldung aller Alarme wesentlich entlasten.

In einer Multi-Manager-Umgebung muß der Agent allgemein in der Lage sein, Aufgaben von mehreren Managers zu bewältigen, dies auch zur gleichen Zeit. Auf der anderen Seite kann ein Manager seine Funktion nur dann optimal erfüllen, wenn alle relevanten Ereignisse ("Event reports") aus den untergeordneten Agents möglichst schnell empfangen werden. Unter Normalbedingungen, d.h. wenn die Kommunikation zwischen Agent und Manager(s) funktioniert, geschieht dies über einen Event Reporting- bzw. Ereignisberichts-Mechanismus. Hierbei generiert der Agent nach Erkennung eines Ereignisses eine entsprechende Nachricht. Neben den bereits genannten Alarm-Nachrichten sind dies z.B. Nachrichten bzw. Notifikationen zu einer Zustandsänderung (State change), Objekterzeugung, -löschung (Object creation / Object deletion) oder Attributwertänderungen (Attribute value change Notification). Diese werden an eventuell im Agenten vorhandene Ereignisweiterleitungs-Diskriminatoren (Event Forwarding Diskriminatoren) gesendet, sogenannte EFDs .

Die Aufgabe eines EFD besteht darin, nur diejenigen Ereignisberichte zum Manager zu leiten bzw. routen, welche bestimmten Filterkriterien genügen. Der Manager ist in der Lage solche EFDs im Agent einzurichten oder zu löschen und die Filterkriterien festzulegen. Dadurch kann jeder Manager zu jeder Zeit den Informationsfluß nach seinen individuellen Anforderungen steuern.

In einer objekt-orientierten Umgebung, wie z.B. zwischen Manager und Agent in einem Mobilfunk-Netz, wird jede Agent-Funktionalität von einem bestimmten Objekt als Instanz einer Objektklasse bereitgestellt. Das Objekt entsteht als Ergebnis der Modellierungs-Tätigkeit (Definition eines Information Model) und ist sowohl dem Manager als auch dem ausführenden Agent bekannt.

Wie beschrieben, gibt es verschiedene Situationen, in denen ein genereller Datenabgleich - sogenannter Alignment - hinsichtlich insbesondere Alarmen, Zuständen, Konfigurationsänderungen zwischen Manager(n) und Agent(en) nötig ist, der über den normalen Ereignisberichts-Mechanismus hinausgeht, z.B. nach einem Verbindungsabbruch oder nach einer Initialisierung des Agents oder Managers. Dieser Alignment wird zumeist auf Manager-Anforderung (manager request) gestartet.

Insbesondere für den Einsatz bei einem Mobilfunksystem der dritten Generation, wie UMTS (Universal Mobile Telecommunication System) soll ein optimales und vorzugsweise standardisierungsfähiges Alignment-Verfahren zwischen Manager(n) und Agent(en) möglichst viele der folgenden Kriterien erfüllen:
1. Das Verfahren soll möglichst nur standardisierte Dienste / Protokolle verwenden und von generischer Natur sein, um spezifische Manager- bzw. Agent-Implementierungen zu vermeiden.
2. Die Alignment-Information soll - zumindest für die sogenannten "mandatory" Parameter - den gleichen Inhalt wie die originale Notification enthalten, was vor allem für sogenannte dynamische Informationen, wie Alarme oder Zustände wichtig ist.
3. Der Manager soll bei vom Manager zu steuernden Datenabgleichen den Alignment-Start bestimmen und das Alignment-Ende eindeutig erkennen können.
4. Der Manager soll zwischen einer "on-line" (normalen) Notification und einer Notification unterscheiden können, die als Folge einer vorher gestarteten Alignment-Prozedur empfangen wird.
5. Die durch die Alignment-Prozedur vom Agent gesendeten Notificationen verwenden die gleichen EFDs wie die "normalen" Notificationen.
6. Für die durch die Alignment-Prozedur vom Agent gesendeten Notificationen gelten die gleichen Log-Einstellungen wie für die "normalen" Notificationen.
7. Der Manager kann ein vollständiges oder nur ein Teil-Alignment-Verfahren anfordern, z.B. abhängig von bestimmten Parameterwerten.
8. In einer Multi-Manager-Umgebung soll jeder Manager nur diejenigen Notificationen empfangen, die als Folge einer von ihm selbst getriggerten Alignment-Prozedur gesendet werden, und zwar auch dann, wenn parallel-laufende Alignments von mehreren Managers ausgeführt werden.
9. Der Manager kann auch dann zwischen Notificationen unterscheiden, wenn mehrere eigene Alignment-Prozeduren zur gleichen Zeit laufen, z.B. für unterschiedliche Daten oder Netzregionen.

Bislang gibt es zwei grundsätzliche Arten von Datenabgleich- bzw. Alignment-Verfahren:
a) Der Manager sendet an den Agent eine Anforderung (M-ACTION Request bzw. -Anforderung gemäß ITU-T Standard X.710), welche die Alignment-Parameter und eine eindeutige Nummer enthält. Der Agent sendet zuerst eine sogenannte "Start alignment"-Notification - für die Korrelation aller durch das Alignment-Verfahren gesendeten Notificationen mit dem Manager-Request - und anschließend die Alignment-Notificationen an alle EFD-Instanzen. Das Ende der Alignment-Prozedur wird dem Manager durch eine CMISE-standardiserte M-ACTION-Response bzw. -Antwort oder durch eine gesonderte "End alignment"-Notification mitgeteilt (CMISE: Common Management Information Service Element).
   Dieses bereits in Mobilfunk-Systemen verwendete Verfahren ist jedoch nachteilhaft, da nicht standardisierte Notificationen ("Start alignment" / "End alignment") eingeführt werden. In einer Multi-Manager-Umgebung werden zudem in nachteilhafter Weise die durch einen bestimmten Alignment-Vorgang gesendeten Notificationen auch von allen anderen Managers empfangen, was unnötige bzw. mehrfach empfangene Notificationen zur Folge hat. Somit werden die vorstehenden Kriterien 1 und 8 nicht erfüllt.
b) Der Manager sendet eine Anforderung, eine CMISE-standardisierte M-ACTION-Request, welche die Alignment-Parameter enthält , darunter auch die Filterkriterien für diese Alignment-Prozedur. Der Agent muß dabei zuerst die den Kriterien entsprechenden Notificationen bestimmen. Danach bildet der Agent eine M-ACTION-Response mit allen diesen Notificationen und sendet diese an den Request-Urheber bzw. Manager.
   Dieses Verfahren ist ebenfalls nachteilhaft, da es eine spezifische Implementierung bedeutet, weil der Agent zuerst alle potentiellen Notificationen gemäß den in der M-ACTION-Request enthaltenen Filterkriterien überprüfen muß. Dies führt zu einem schlechteren Zeitverhalten der Alignment-Prozedur. Zudem benutzen die Alignment-Notificationen nicht die gleichen Filter bezüglich dem Ereignisbericht bzw. "Event reporting" (im EFD) und dem Ereignisprotokollieren bzw. "Event logging" (LOG) wie die "normalen" Notifications. Folglich werden die vorstehenden Kriterien 1, 5 und 6 nicht erfüllt.

Die Aufgabe dieser Erfindung besteht darin, ein derartiges Verfahren und Kommunikationssystem zum Datenabgleich in einem mehrere Managementebenen aufweisenden Managementnetz vorzuschlagen, das für unterschiedliche Managementdaten geeignet ist und durch das ein Datenabgleich zwischen einem Agent und zumindest einem Manager weiter verbessert wird.

Diese Aufgabe wird hinsichtlich des Verfahrens durch die Merkmale des Patentanspruchs 1 und hinsichtlich des Kommunikationssystems durch die Merkmale des Patentanspruchs 9 gelöst. Vorteilhafte Weiterbildungen sind Gegenstand von Unteransprüchen.

Das vorgeschlagene Verfahren ist ein generisches Verfahren für den Ablauf einer Alignment-Prozedur, die alle oben erwähnten Kriterien erfüllt. D.h. es ist insbesondere von der übertragenen Information bzw. Manager-/Agent-Implementierungen unabhängig.

Zudem sind keine zusätzlichen, in den Standards noch nicht definierten Notificationen erforderlich. Dies bedeutet eine einfache, standard-konforme Implementierung im Agent und eine einfache Korrelation im Manager zwischen Request und Alignment-Notificationen.

Das Zwischenschalten der Filtereinheiten zwischen die eigentlichen Funktionseinheiten von Managern und Agenten entlastet diese zugunsten von deren Routineaufgaben. Eigenständige Filterfunktionen für die Zuordnung von Datenabgleichsdaten zu bestimmten Managern sind in Managern und Agenten nicht mehr erforderlich.

Die Filtereinheiten in den Ausgangs- bzw. Ausgabebereichen der Agenten anzuordnen entlastet das zwischen Agenten und Managern liegende Kommunikationsnetz bzw. dessen dazwischenliegenden Einrichtungen in besonders vorteilhafter Weise.

Die Verwendung von optionalen Zusatzfeldern, insbesondere dem Feld "Additional text", ermöglicht die Verwendung der bestehenden Standards ohne Neudefinitionen. Im Idealfall sind lediglich programmtechnische Änderungen der Steuersoftware in Managern und Agenten erforderlich.

Nachstehend wird die Erfindung anhand von Ausführungsbeispielen unter Bezugnahme auf die Figuren näher erläutert. Es zeigen
- FIG 1: das Blockschaltbild eines Managementnetzes für ein Mobil-Kommunikationssystem mit Agent-Manager-Beziehung zwischen einem Betriebs- und Wartungszentrum und einem oder mehreren Netzmanagementzentren,
- FIG 2: das Blockschaltbild des Managementnetzes gemäß Figur 1 mit Agent-Manager-Beziehung zwischen einem Basisstationssystem und einem Betriebs- und Wartungszentrum zur Durchführung von zumindest zwei Anwendungen für das Basisstationssystem,
- FIG 3: das Blockschaltbild von Agent und Managern zur Behandlung der Ereignisse für parallel oder seriell ablaufende Datenabgleiche,
- FIG 4: den Nachrichtenfluß zwischen einem Manager und dem Agent zur Steuerung der Datenfilterung am Beispiel von Alarmen beim Datenabgleich.

Das Ausführungsbeispiel beschreibt die Erfindung anhand eines beispielhaften TMN-Konzeptes für das Management eines Mobil-Kommunikationssystems, das beispielsweise Netzeinrichtungen eines Mobilfunknetzes nach dem UMTS- oder dem GSM-Standard aufweist. Das Konzept ist aber nicht auf Mobilfunknetze beschränkt, sondern läßt sich auf Telekommunikationsnetze jeder Art anwenden, die ein TMN-Managementnetz nutzen.

Ein Mobil-Kommunikationssystem ist ein hierarchisch gegliedertes System verschiedener Netzeinrichtungen, bei dem die unterste Hierarchiestufe von den Mobilstationen gebildet wird. Diese Mobilstationen kommunizieren über eine Funkschnittstelle mit die nächste Hierarchieebene bildenden Funkstationen, die als Basisstationen bezeichnet werden. Die beispielsweise Mobilstationen in einem Funkbereich einer Funkzelle versorgenden Basisstationen sind vorzugsweise zur Abdeckung eines größeren Funkgebiets zusammengefaßt und mit übergeordneten Netzeinrichtungen, den Basisstationssteuerungen verbunden. Die Basisstationen und Basisstationssteuerungen gehören zu einem Basisstationssystem (Base Station Subsystem) des Mobil-Kommunikationssystems. Die Basisstationssteuerungen kommunizieren über definierte Schnittstellen mit einer oder mehreren Vermittlungseinrichtungen, den Mobilvermittlungsstellen, über die u.a. auch der Übergang zu anderen Kommunikationsnetzen erfolgt. Die Mobilvermittlungsstellen bilden gemeinsam mit einer Mehrzahl von Datenbanken das Vermittlungssystem (Switching Subsystem) des Mobil-Kommunikationssystems.

Neben den obigen Netzeinrichtungen existieren ein oder mehrere Betriebs- und Wartungszentren (Operation and Maintenance Centers), die u.a. zum Konfigurieren und Überwachen der Netzeinrichtungen dient. Überwachungsmaßnahmen und Konfigurierungsmaßnahmen werden hierzu meist vom Betriebs- und Wartungszentrum aus ferngesteuert, die üblicherweise im Bereich der Mobilvermittlungsstellen angeordnet sind. Ein Betriebs- und Wartungszentrum kommuniziert dabei jeweils mit einem Basisstationssystem oder Vermittlungssysstem über eine definierte Schnittstelle. Eine weitere Aufgabe des Betriebs- und Wartungssystems ist die Durchführung des Konfigurationsmanagements (Configuration Management), das neben dem Fehlermanagement einen von fünf Managementfunktionsbereichen darstellt, die die TMN-Prinzipien identifizieren. Das Konfigurationsmanagement definiert eine Reihe von Diensten, die eine Änderung der Struktur und damit des Verhaltens eines Telekommunikationsnetzes durch den Bediener ermöglichen. Diese Dienste beziehen sich immer auf Instanzen von gemanagten Objekten, die insgesamt die netzspezifische Managementinformationsbasis bilden.

Ein gemanagtes Objekt im Sinne des Konfigurationsmanagements ist eine logische Abstraktion einer Ressource im Mobil-Kommunikationssystem. Hierbei wird unterschieden zwischen hardwarebezogenen gemanagten Objekten, die eine herstellerspezifische Realisierung einer Funktion beschreiben, und funktionsbezogenen gemanagten Objekten, bei denen es sich jeweils um die Abstraktion einer herstellerunabhängigen Funktionalität handelt.

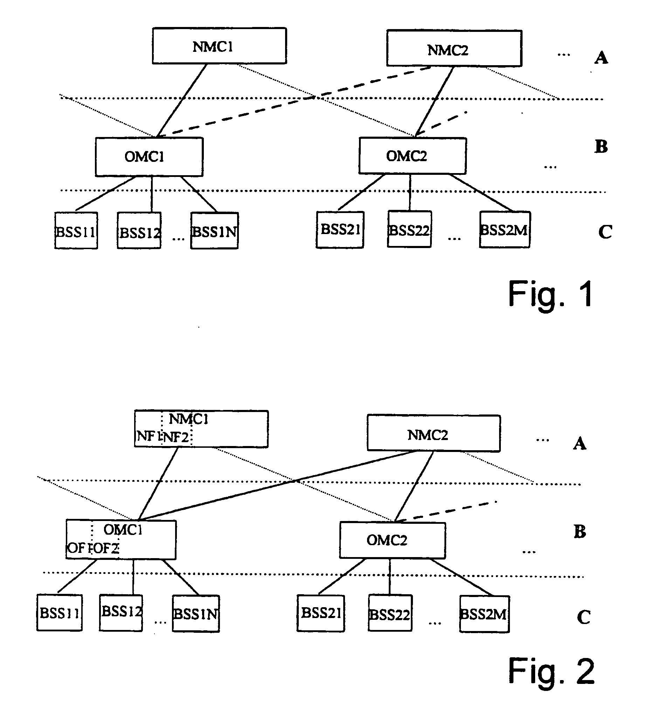

Für das Management des Mobil-Kommunikationssystems, das im folgenden anhand von "Fault Management" erläutert wird, definieren die TMN-Prinzipien mehrere Ebenen ("Levels"), von denen im vorliegenden Beispiel drei Ebenen unter Bezugnahme auf die Figuren 1 und 2 nachfolgend erläutert werden.

Die Figuren 1 und 2 zeigen jeweils drei Ebenen A, B und C des Managementnetzes, von denen die Managementebene C die Netzeinrichtungsebene ("Network Element Level") mit mehreren Basisstationssystemen BSS11, BSS12...BSS1N sowie BSS21, BSS22 ...BSS2M enthält. Die Managementebene B kennzeichnet die Netzeinrichtungsmanagementebene ("Network Element Management Level"), in der Betriebs- und Wartungszentren OMC1 und OMC2 jeweils die herstellerspezifische Managementfunktionalität für einzelne Subsysteme, wie im vorliegenden Beispiel das Betriebs- und Wartungszentrum OMC1 für die Basisstationssysteme BSS11, BSS12 ...BSS1N und das Betriebs- und Wartungszentrum OMC2 für die Basisstationssysteme BSS21, BSS22...BSS2M, bereitstellen. Die Managementebene A kennzeichnet die Netzmanagementebene ("Network Management Level"), in der Netzmanagementzentren NMC1 und NMC2 jeweils eine integrierte, vom Hersteller unabhängige Management-Funktionalität realisieren. Dabei können mehrere Netzmanagementzentren einen Zugriff zu derselben Netzeinrichtung der nächstniedrigeren Managementebene B haben, im vorliegenden Beispiel die Netzmanagementzentren NMC1 und NMC2 der nächsthöheren Managementebene C zum Betriebs- und Wartungszentrum OMC1 der nächstniedrigeren Managementebene B. Zwischen den Netzeinrichtungen unterschiedlicher Managementebenen sind definierte Schnittstellen zur Informationsübertragung vorgesehen.

Der Unterschied in den Darstellungen gemäß den Figuren 1 und 2 liegt darin, daß eine Agent-Manager-Beziehung zur Behandlung von Alarmen für einen oder mehrere Alarmdatenabgleiche in Figur 1 zwischen dem Betriebs- und Wartungszentrum OMC1 (Agent) und einem Netzmanagementzentrum NMC1 (Manager) oder mehreren - physikalisch getrennten - Netzmanagementzentren NMC1, NMC2 (Manager) sowie in Figur 2 zwischen dem Basisstationssystem BSS11 (Agent) und zwei verschiedenen Anwendungen OF1 und OF2 (Manager) in dem Betriebs- und Wartungszentrum OMC1 oder zwischen dem Betriebs- und Wartungszentrum OMC1 (Agent) und zwei verschiedenen Anwendungen NF1 und NF2 (Manager) in dem Netzmanagementzentrum NMC1 besteht. Um in den Netzmanagementzentren NMC1, NMC2 jederzeit einen Überblick über die Fehlersituation sicherzustellen, werden vom Betriebs- und Wartungszentrum OMC1 die - auf Grund von beispielsweise innerhalb der betreuten Basisstationssysteme BSS11 ... BSS1N auftretenden Fehlern - gespeicherten Alarmdaten aktiver Alarme bereitgestellt und parallel zu beiden Managern auf Anforderung gesendet. Dies erfolgt vorzugsweise nach einem Verbindungsabbruch oder nach einer Initialisierung des Agenten oder des Managers. Ebenso können mehrere Anforderungen auch hintereinander von einem einzelnen Manager, z.B. dem Netzmanagementzentrum NMC1 an den Agent, z.B. dem Betriebs- und Wartungszentrum OMC1, gerichtet werden. Figur 1 zeigt die Struktur für gemäß der Erfindung mehrfach ausgesendete Anforderungen zum Alarmdatenabgleich, die im vorliegenden Beispiel parallel zwischen der Managementebene B, in der sich der Agent in Form des Betriebs- und Wartungszentrums OMC1 befindet, und der nächsthöheren Managementebene A, in der die Manager von zumindest zwei Netzmanagementzentren NMC1, NMC2 gebildet werden, ablaufen.

Um auch in der Managementebene B, z.B. in dem Betriebs- und Wartungszentrum OMC1 jederzeit einen Überblick über die Fehlersituation sicherzustellen, werden vom Basisstationssystem BSS11 die - auf Grund von beispielsweise innerhalb der betreuten Basisstationen und Basisstationssteuerungen auftretenden Fehlern - gespeicherten Alarmdaten aktiver Alarme bereitgestellt und parallel zu mindestens zwei Managern des Betriebs- und Wartungszentrums OMC1 in Form der unterschiedlichen Anwendungen OF1 und OF2, die beide von ein- und derselben physikalischen Einrichtung OMC1 ausgeführt werden, gesendet. Dies erfolgt ebenfalls vorzugsweise nach einem Verbindungsabbruch oder nach einer Initialisierung des Agenten oder des Managers. Eine serielle Übertragung von mehrfach durch einen einzelnen Manager, z.B. dem Betriebs- und Wartungszentrum OMC1, initiierten Anforderungen an den Agent, z.B. dem Basisstationssystem BSS11, ist ebenfalls möglich. Alternativ oder zusätzlich kann eine Agent-Manager Beziehung auch zwischen dem Betriebs- und Wartungszentrum OMC1 (ein Agent) und dem Netzmanagementzentrum NMC1 (ein Manager) zum seriellen Austausch von Anforderungen und Alarmdaten oder zum parallelen Austausch von Anforderungen und Alarmdaten für mindestens zwei unterschiedliche Anwendungen NF1 und NF2 (zwei Manager) im Netzmanagementzentrum NMC1 existieren. Figur 2 zeigt die Struktur für gemäß der Erfindung parallel ablaufende Alarmdatenabgleiche zwischen der Managementebene B, in der sich die Manager als Anwendungen OF1 und OF2 befinden, und der nächstniedrigeren Managementebene C, in der sich der Agent befindet.

Sobald eine in der Managementebene C ausgefallene interne Schnittstelle wieder betriebsbereit ist, wird auf Anforderung des Managers/der Manager der Alarmdatenabgleich, auch als Realignment-Prozedur oder Realignment-Verfahren bezeichnet, gestartet, wobei gemäß der Erfindung vom Manager der Alarmdatenabgleich parameterabhängig gesteuert wird. Dabei beginnt der Alarmdatenabgleich im vorliegenden Beispiel zuerst zwischen dem Basisstationssystem, z.B. BSS11, und den Anwendungen OF1, OF2 im Betriebs- und Wartungszentrum OMC1 parallel und setzt sich anschließend zwischen dem Betriebs- und Wartungszentrum OMC1 und den übergeordneten Netzmanagementzentren NMC1, NMC2 parallel fort. Am Ende dieser Prozeduren ist die Fehlersituation sowohl im OMC als auch in den NMC wieder aktualisiert. Das Realignment-Verfahren kann selbstverständlich auf die Aktualisierung der Alarmdaten zwischen Agent und Managern in zwei unmittelbar angrenzenden Managementebenen, z.B. Ebene B und Ebene A, beschränkt sein.

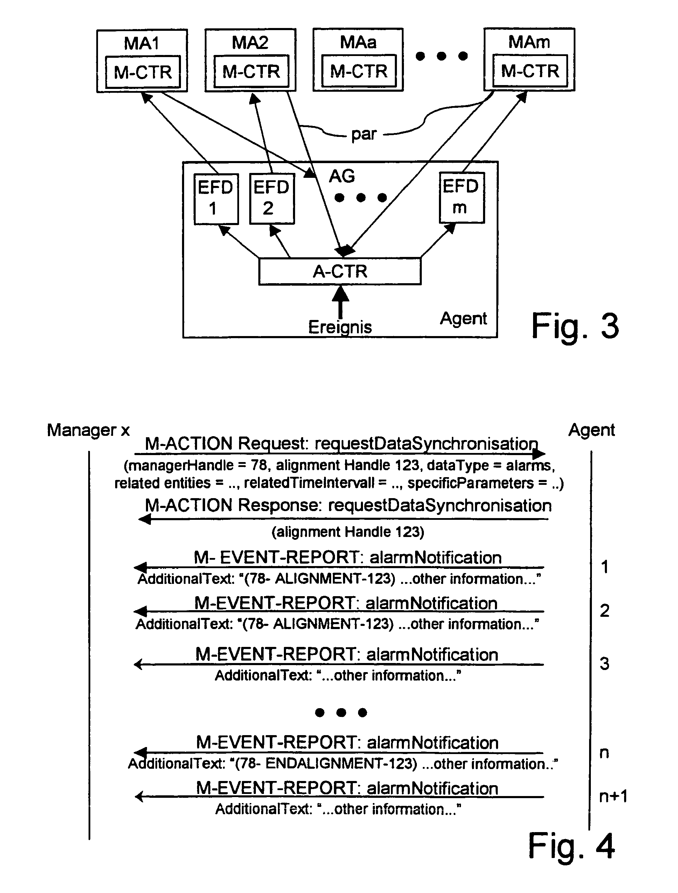

Figur 3 zeigt in schematischer Darstellung den Aufbau von Agent AG und Manager MA1, MA2 mit den zur Durchführung simultan - bei zwei oder mehreren Managern - oder seriell - bei nur einem Manager - ablaufender Realignment-Prozeduren erforderlichen Einrichtungen. Jeder Manager MA1, MA2 und Agent AG verfügt über eine Steuereinrichtung M-CTR bzw. A-CTR, die die Nachrichten für den Alarmdatenabgleich generieren und auswerten können. Ebenso weisen sie - nicht näher dargestellte - Sende/Empfangseinrichtungen für das Versenden und Empfangen der Nachrichten sowie Speichereinrichtungen für das Speichern der Alarmdaten und anderer Nutz- und Signalisierungsinformationen auf.

Dabei fügen die Steuereinrichtungen M-CTR der Manager MA1, MA2 in die jeweilige Anforderungsnachricht zur Übermittlung der Alarmdaten durch den Agent eine zur Zuordnung der Anforderung zu nachfolgend gesendeten Nachrichten benutzte Korrelationsinformation ein, die eindeutig ist, und veranlaßt die Übertragung zum Agent. Darüber hinaus fügen die Einrichtungen M-CTR der Manager MA1, MA2 zur Steuerung des Alarmdatenabgleichs einen oder mehrere Parameter par in jede Anforderungsnachricht individuell ein, um bestimmte, durch verschiedene Parameterwerte gekennzeichnete Alarme gezielt anzufordern. Die jeweilige Anforderungsnachricht wird mit den Parametern par zum Agent AG gesendet. Erst durch die parametrisierbare Alignment-Funktionalität gemäß der Erfindung können beispielsweise eine Priorisierung der Alarme und/oder eine aktive Steuerung der Reihenfolge der angeforderten Alarme erzielt werden.

Die Steuereinrichtung A-CTR des Agent AG empfängt die entsprechende Nachricht mit den Parametern par, wertet sie aus, und startet das Realignment zu den Managern MA1, MA2 durch Rücksenden der von den Managern spezifisch angeforderten Alarme. Dabei wird die von den Managern MA1, MA2 in die Anforderungsnachricht eingetragene eindeutige Korrelationsinformation zur Korrelation der Anforderungen benutzt, und jeweils eine Nachricht mit einer weiteren Korrelationsinformation zur Zuordnung der nachfolgend vom Agent gesendeten Nachrichten (alarm notifications) zu dem jeweils gestarteten Realignment in die nächsthöhere Managementebene gesendet. Auch die weitere Korrelationsinformation ist eindeutig. Durch die Verwendung der Korrelationsinformationen ist eine eindeutige Zuordnung simultan oder seriell durchgeführter Realignments zu mehreren Managern oder einem einzelnen Manager möglich.

Besonders die Kombination der Basisfunktionalität - Verwendung der Korrelationsinformationen - mit der parametrisierbaren Alignment-Funktionalität führt zu einem besonders effektiven Verfahren und Kommunikationssystem, das eine optimale Nutzung der Übertragungsressourcen auf der Schnittstelle der Agent-Manager-Beziehung sowie ein schnellstmögliches Bereitstellen nur der vom Manager gewünschten Alarmdaten aktiver Alarme für die nächsthöhere Managementebene durch den Agent bewirkt. Ressourcenausnutzung, Zeitdauer und Flexibilität werden folglich in dem erfindungsgemäß ausgestalteten Kommunikationssystem gegenüber der Basisfunktionalität weiter optimiert. Dies gilt zudem nicht nur für die Alarmverwaltung sondern generell für einen Datenabgleich.

Wahlweise können im Agent AG mehrere, jeweils den Managern MA1, MA2 zuordenbare und von ihnen steuerbare Filterfunktionen EFD1, EFD2 (Event Forwarding Discriminators) mit Filterkriterien für die vom Agent AG erzeugten Nachrichten mitbenutzt werden, sodaß die Nachrichten mit den Alarmdaten nur bei Erfüllen der Filterkriterien zu den Managern MA1, MA2 geroutet werden. Die Steuereinrichtung M-CTR des Managers ist in der Lage, derartige Filterfunktionen im Agent AG einzurichten, zu löschen und die Filterkriterien festzulegen, um je nach seinen individuellen Anforderungen den Nachrichtenfluß steuern zu können. Daher kann der Fall auftreten, daß die Filterfunktions-Einstellung von Manager zu Manager unterschiedlich ist, sodaß durch die simultan ablaufenden Realignment-Prozeduren inhaltlich verschiedene Alarme mit zugehörigen Alarmdaten behandelt werden.

Figur 4 zeigt den Nachrichtenfluß zwischen einem Agent AG - im dargestellten Beispiel gemäß der Figur 1 dem Betriebs- und Wartungszentrum OMC1 oder im dargestellten Beispiel der Figur 2 dem Basisstationssystem BSS11 - und dem Manager MA1, MA2, ... MAn - im Beispiel gemäß der Figur 1 den unterschiedlichen Netzmanagementzentren NMC1, NMC2 oder im Beispiel der Figur 2 den verschiedenen Applikationen OF1, OF2.

Der Nachrichtenfluß erfolgt vorzugsweise unter Verwendung standardisierter M-EVENT-REPORT Nachrichten, die als Folge einer zu Anfang initiierten M-ACTION-Request "Anforderung" gesendet werden. Diese sind generische CMISE-standardisierte (Common Management Information Service Element) Dienste, die gemäß ITU-T X.710 definiert sind. Die ITU-T X.733 definiert den Inhalt einer standardisierten Alarmübertragung (alarm report), die gemäß den M-EVENT-REPORT Services durchgeführt wird. Korrelationsinformationen werden in die Nachrichten bzw. in bestimmte Nachrichtenfelder eingetragen. Das Beispiel in Figur 4 zeigt den Nachrichtenfluß nur anhand einzelner Nachrichten, wobei diese parallel zwischen dem Agent AG und den Managern MA1, MA2 oder seriell zwischen dem Agent AG und dem einzelnen Manager MA1 übertragen werden können, wie dies bis hier aus z.B. der DE 198 01 785 bekannt ist.

Vorliegend werden beim hier dargestellten Ausführungsbeispiel z.B. eines Alarm-Alignment-Beispiels insbesondere die folgenden, im Standard ITU-T X.721 spezifizierten Merkmale verwendet.
- Jede für ein Alignment-Verfahren in Frage kommende standardisierte Notification (alarm notification, state change notification, attribute value change notification, object creation notification, object deletion notification) enthält als optionalen Parameter (Attribut) den Zusatztext (Additional text).
- Die Definition des Parameters "Additional text" (vom Typ GraphicString, d.h. Zeichenkette) enthält die Klausel: "Übereinstimmungsbegriffe für Gleichheit, Unterketten" ("MATCHES FOR EQUALITY, SUBSTRINGS").

Gemäß Standard ITU-T X.722 kann dieses Attribut auf das Vorhandensein einer bestimmten Sub-Zeichenkette (SUBSTRING) getestet werden. Das Testergebnis kann insbesondere in EFD- oder LOG-Instanzen auch als Filterkriterium für diejenigen Notificationen verwendet werden, die dieses Attribut enthalten.

Der Ablauf der beispielhaften Alignment-Prozedur wird nun anhand der verwendeten Befehle erläutert.

Im normalen Betrieb enthält die Vorgabe- bzw. Default-Filtereinstellung jeder EFD-Instanz im Agent die hier als Klartext beschriebene Klausel:
<Jede Notification mit der Zeichenkette "ALIGNMENT" im Additional text-Feld wird ausgefiltert>.

Durch die Verwendung dieser Klausel wird insbesondere durch die EFDs verhindert, daß ein Manager diejenigen Notificationen erhält, die als Folge einer durch einen anderen Manager initiierten Alignment-Prozedur gesendet werden.

Jedesmal wenn ein Manager (z.B. Manager 2) einen Alignment-Vorgang startet, ersetzt er die Default-Filtereinstellung seiner EFD-Instanz im Agent durch eine Alignment-Filtereinstellung in Art der folgenden Klausel, die hier wieder als Klartext beschrieben ist:
<Jede Notification mit den SUBSTRINGS "(aaaa-ALIGNMENT" oder "(aaaa-ENDALIGNMENT" im "Additional text"-Feld wird nicht ausgefiltert.>,
wobei aaaa eine Nummer ist, die den aktuellen Manager eindeutig kennzeichnet. Diese Nummer kann z.B. vom Agent bei jedem Verbindungsaufbau zum aktuellen Manager vergeben werden.

Jedesmal wenn die Kommunikation zwischen einem Manager (z.B. Manager 2) und Agent wieder hergestellt wird, z.B. nach einer Unterbrechung der Verbindung, sendet dieser Manager eine CMISE-standardisierte M-ACTION-Anweisung mit folgenden Parametern an den Agent:

| | |
|---|---|
| Aktionstyp: | * "Datensynchronisierung anfordern" |
| (Action type: | "requestDataSynchronisation"). |
| Aktionsinformation: (Action information) | * "Manager-Handling" (managerHandle), z.B. der zuvor definierte Wert aaaa). Diese eindeutige Nummer wird vom Agent als Antwort auf den aktuellen Manager-Request zur Identifizierung aller nachfolgend gesendeten Notificationen verwendet. |
| | * "Alignment-Handling" (alignment-Handle), z.B. mit einem Wert abc. Dieser Parameter identifiziert für den Manager 2 den aktuellen Alignment-Vorgang eindeutig. Wie das oben erwähnte Kriterium 9 spezifiziert, muß der Manager die empfangenen, alignment-bezogenen Notificationen dem richtigen Alignment-Vorgang zuordnen, auch wenn mehrere eigene Alignment-Prozeduren zur gleichen Zeit laufen sollten. |
| | * "Datentyp" (dataType). |
| | Dieser Parameter spezifiziert die Art der Daten, die zwischen Agent und Manager synchronisiert werden sollen, also z.B. Alarme, Zustände oder Konfigurationsänderungen. |
| | * "bezogene Einheiten" (relatedEntities) Dieser Parameter gibt an, von welchen Netzeinheiten die angeforderten Daten stammen sollen (z.B. von einer bestimmten Netzregion). |
| | * "bezogenes Zeitintervall" (relatedTimeInterval). Dieser Parameter spezifiziert den Zeitrahmen, in dem die vom Agent zu sendenden Notificationen entstanden sind, z.B. alle Alarme zwischen 18:00 und 22:00 Uhr. |
| | * "spezifische Parameter" (specificParameters). |
| | Abhängig vom oben-definierten Parameter "Datentyp" (dataType) werden in diesem Feld spezifische Parameter definiert, z.B. für Alarme, nur diejenigen mit einem bestimmten perceivedSeverity-Wert). |

Nach Bestätigung der Anforderung durch eine "M-ACTION Response" sendet der Agent hintereinander alle betreffenden Notificationen an alle vorhandenen EFD-Instanzen (gemäß ITU-T Standard X.734). Mit Ausnahme der letzten Notification enthält jede für den Datenabgleich bzw. Alignment gesendete Notification am Anfang des Zusatztext-Feldes "Additional text" die Zeichenkette "(aaaa-ALIGNMENT-abc)", wobei aaaa und abc die vorher erläuterte Bedeutung haben.

Die letzte vom Agent gesendete Notification für diesen Alignment-Vorgang enthält am Anfang des Zusatztext-Feldes "Additional text" die Zeichenkette "(aaaa-ENDALIGNMENT-abc)".

Die gesonderte Filtereinstellung der EFD-Instanz des Managers 2 stellt sicher, daß die vom Agent für den Alignment gesendeten Notificationen nur diesen einen Diskriminator passieren können. Auch wenn ein anderer Manager (Manager 1) zur gleichen Zeit eine Alignment-Prozedur mit z.B. dem eindeutigen "alignmentHandle" = "bbbb" startet, erhält Manager 2 nur "seine" Notificationen mit der Kennung aaaa.

Fig. 4 zeigt einen beispielhaften Nachrichten-Austausch zwischen einem Manager a und einem Agent für eine Alarm-Alignment-Prozedur, wobei die Parameter "managerHandle" z.B. den Wert 78 und alignmentHandle z.B. den Wert 123 haben.

Während der Alignment-Prozedur können neu entstandene Notificationen, die nicht als Folge einer gerade laufenden Alignment-Prozedur gesendet werden und deshalb keine Sonderstrings enthalten, grundsätzlich alle EFD-Instanzen passieren (z.B. Notification 3 in Fig. 4), d.h. alle übergeordneten Managers erreichen.

Der Manager a ist auch in der Lage das Ende seiner Alignment-Prozedur zu erkennen, hier der Notification n mit der eindeutigen Kennung "(aaaa-ENDALIGNMENT-abc)".

Am Ende der Alignment-Prozedur, d.h. nach dem Empfang der Notification mit dem SUBSTRING "(aaaa-ENDALIGNMENT-abc)", setzt der Manager a die Default-Filtereinstellung zurück.

Wenn zum Zeitpunkt des Manager-Request kein Alignment erforderlich ist, weil z.B. keine aktiven Alarme vorhanden sind, erhält der Manager a in der "M-ACTION-Response" (Parameter Action reply) einen entsprechenden Hinweis.

Alternativ können die EFDs auch Bestandteil der entsprechenden Manager oder einer zwischen Manager und Agent geschalteten Einheit sein. Der Manager selber soll dadurch entlastet werden, daß die nicht für ihn bestimmten Informationen vor der Ankunft bei ihm durch den ihm zugeordneten EFD herausgefiltert werden.

Die gleiche Vorgehensweise kann auch für LOG-Diskriminatoren verwendet werden oder bei sonstigen vergleichbaren Einheiten mit Filterfähigkeiten ausgebildet oder Bestandteil von diesen sein.

## Patentansprüche

1. Verfahren in einem Telekommunikationsnetz zum Datenabgleich durch ein zumindest zwei Managementebenen (A, B, C) aufweisendes Managementnetz,
wobei für den Datenabgleich zwischen zumindest einem Agent (AG) einer Managementebene (B, C) und zumindest einem Manager (MA1, MA2) einer nächsthöheren Managementebene (A, B) Datenabgleichs-Daten von dem Agenten (AG) an den Manager (MA1, MA2) übertragen werden, bei dem
von dem Manager (MA1, MA2) an den Agent (AG) eine oder mehrere Anforderungsnachrichten (M-ACTION Request) zum Übermitteln der Datenabgleichs-Daten gesendet werden,
der Manager (MA1, MA2) Korrelationsinformationen (managerHandle, 78) für eine Zuordnung der jeweiligen Anforderung zu den vom Agent (AG) nachfolgend gesendeten Datenabgleichs-Daten übermittelt,
wobei Filtereinrichtungen (EFD) verwendet werden, welche Daten mehrerer Manager (MA1, MA2) empfangen und die Datenabgleichs-Daten abhängig von den Korrelationsinformationen (managerHandle, 78) nur zum die jeweiligen Datenabgleichs-Daten anfordernden Manager (MA1, MA2) hindurchlassen,
**dadurch gekennzeichnet,**
**dass** die Filtereinrichtungen (EFD) unter Verwendung einer Filtereinstellung alle Datenabgleichs-Daten anhand von Informationen eines Zusatzfeldes (Additional Text) von die Datenabgleichs-Daten enthaltenden Nachrichten (M-EVENT-REPORT) herausfiltern.

2. Verfahren nach Anspruch 1, bei dem
die beim Datenabgleich abzugleichenden Datenabgleichs-Daten Alarmdaten insbesondere aktiver Alarme, Zustandsänderungen oder Konfigurationsänderungen sind.

3. Verfahren nach Anspruch 1 oder 2, bei dem
die Korrelationsinformationen (managerHandle, 78) vom Agenten (AG) vor dem Übermitteln von die Datenabgleichs-Daten enthaltenden Nachrichten (M-EVENT-REPORT) an die Filtereinrichtungen (EFD) in ein optionales Zusatzfeld (Additional Text) der die Datenabgleichs-Daten enthaltenden Nachrichten (M-EVENT-REPORT) eingesetzt werden.

4. Verfahren nach einem vorhergehenden Anspruch, bei dem als Filtereinrichtungen (EFD) Ereignisweiterleitungs-Diskriminatoren oder LOG-Diskriminatoren verwendet werden.

5. Verfahren nach einem der Ansprüche 1 bis 4, bei dem die Filtereinstellung des einen Datenabgleich anfordernden Managers (MA1, MA2) in Bezug auf die Informationen des Zusatzfeldes (Additional Text) nach dem Datenabgleich auf die Default-Filtereinstellung zurückgestellt wird.

6. Verfahren nach einem vorhergehenden Anspruch, bei dem eine Filtereinstellung der Filtereinrichtung (EFD) des einen Datenabgleich anfordernden Managers (MA1, MA2) in Bezug auf Informationen eines Zusatzfeldes (Additional Text) von die Datenabgleichs-Daten enthaltenden Nachrichten (M-EVENT-REPORT) zum Herausfiltern aller Datenabgleichs-Daten von anderen Managern (MA1, MA2) eingestellt wird.

7. Verfahren nach einem vorhergehenden Anspruch, bei dem alle Datenabgleichs-Daten sendende Agenten (AG) Datenabgleichs-Daten enthaltende Nachrichten (M-EVENT-REPORT) mit der Korrelationsinformation (managerHandle, 78) in einem Zusatzfeld an die Filtereinrichtungen (EFD) von allen Managern (MA1, MA2) übermitteln.

8. Kommunikationssystem mit einem zumindest zwei Managementebenen (A, B, C) aufweisenden Managementnetz, mit
Managern (MA1, MA2) und Agenten (AG) zum Datenabgleich, Mitteln der Agenten (AG) zum Senden von Datenabgleichs-Daten an übergeordnete Manager (MA1, MA2),
wobei Filtereinrichtungen (EFD) vorhanden sind, welche Datenabgleichs-Daten abhängig von zuvor von einem Manager (MA1, MA2) empfangenen Korrelationsinformationen (managerHandle, 78) nur zum die jeweiligen Datenabgleichs-Daten anfordernden Manager (MA1, MA2) hindurchlassen,
**dadurch gekennzeichnet,**
**dass** die Filtereinrichtungen (EFD) eine Filtereinstellung zum Herausfiltern aller Datenabgleichs-Daten anhand von Informationen eines Zusatzfeldes (Additional Text) von die Datenabgleichs-Daten enthaltenden Nachrichten (M-EVENT-REPORT) haben.

9. Kommunikationssystem nach Anspruch 8, bei dem in Managern (MA1, MA2) Einrichtungen zum Einstellen von Filter- bzw. Korrelationsinformationen (managerHandle, 78) in den zugeordneten Filtereinrichtungen (EFD) von Agenten (AG) bereitgestellt sind.

10. Kommunikationssystem nach Anspruch 8 oder 9, bei dem
in Agenten (AG) Einrichtungen zum Einsetzen der Korrelationsinformationen (managerHandle, 78) in Zusatzfelder von Datenabgleichs-Daten enthaltenden Nachrichten (M-EVENT-REPORT), die über zumindest eine Filtereinrichtung (EFD) zu einem Manager (MA1, MA2) zu übertragen sind, bereitgestellt sind.

11. Kommunikationssystem nach einem der Ansprüche 8 bis 10, bei dem die Filtereinrichtungen (EFD) Ereignisweiterleitungs-Diskriminatoren oder LOG-Diskriminatoren sind.

## Claims

1. Method in a telecommunications network for data realignment by means of a management network which has at least two management levels (A, B, C),
with data realignment data being transmitted from the agent (AG) to the manager (MA1, MA2) for data realignment between at least one agent (AG) in one management level (B, C) and at least one manager (MA1, MA2) in a next-higher management level (A, B), in which
the manager (MA1, MA2) sends one or more request messages (M-ACTION Request) to transmit the data realignment data to the agent (AG),
the manager (MA1, MA2) transmits correlation information (managerHandle, 78) for association of the respective request with the data realignment data that is subsequently sent by the agent (AG),
with filter devices (EFD) being used, which receive data from a plurality of managers (MA1, MA2), and pass the data realignment data only to the respective data realignment data requesting manager (MA1, MA2) on the basis of correlation information (managerHandle, 78),
**characterized**
**in that** the filter devices (EFD) use a filter setting to filter out any data realignment data by means of information in an additional field (Additional Text) from the messages (M-EVENT-REPORT) containing data realignment data.

2. Method according to Claim 1, in which
the data which is to be realigned during data realignment is alarm data, in particular active alarms, state changes or configuration changes.

3. Method according to Claim 1 or 2, in which
before transmission of the messages (M-EVENT-REPORT) containing the data realignment data to the filter devices (EFD), the agent (AG) inserts the correlation information (managerHandle, 78) into an optional additional field (Additional Text) in the messages (M-EVENT-REPORT) containing the data realignment data.

4. Method according to a preceding claim, in which
event forwarding discriminators or LOG discriminators are used as filter devices (EFD).

5. Method according to one of Claims 1 to 4, in which
the filter setting of the manager (MA1, MA2) requesting data realignment is reset, with respect to the information of the additional field (Additional Text), to the default filter setting after data realignment.

6. Method according to a preceding claim, in which
a filter setting of the filter device (EFD) of the manager (MA1, MA2) requesting data realignment with respect to the information in an additional field (Additional Text) in the messages (M-EVENT-REPORT) containing data realignment data is set to filter out all data realignment data from other managers (MA1, MA2).

7. Method according to a preceding claim, in which
all agents (AG) sending data realignment data transmit the messages (M-EVENT-REPORT) containing data realignment data with the correlation information (managerHandle, 78) in an additional field to the filter devices (EFD) of all the managers (MA1, MA2).

8. Communications system, having a management network which has at least two management levels (A, B, C), having
managers (MA1, MA2) and agents (AG) for data realignment, with means for the agents (AG) for transmission of data realignment data to higher-level managers (MA1, MA2),
with filter devices (EFD) being provided which pass on data realignment data only to the manager (MA1, MA2) requesting the respective data realignment data, as a function of correlation information (managerHandle, 78) already received from a manager (MA1, MA2),
**characterized**
**in that** the filter devices (EFD) have a filter setting for filtering out all of the data realignment data from the messages (M-EVENT-REPORT) containing the data realignment data, on the basis of information in an additional field (Additional Text).

9. Communications system according to Claim 8, in which devices for setting filter information and/or correlation information (managerHandle, 78) in associated filter devices (EFD) are provided in managers (MA1, MA2) by agents (AG).

10. Communications system according to Claim 8 or 9, in which devices for setting correlation information (managerHandle, 78) in additional fields of messages (M-EVENT-REPORT) containing data realignment data which is to be transmitted via at least one filter device (EFD) to a manager (MA1, MA2) are provided in agents (AG).

11. Communications system according to one of Claims 8-10, in which the filter devices (EFD) are event forwarding discriminators or LOG discriminators.

## Revendications

1. Procédé d'alignement des données dans un réseau de télécommunications, par un réseau de gestion qui présente au moins deux niveaux de gestion (A, B, C),
dans lequel, pour l'alignement des données entre au moins un agent (AG) d'un niveau de gestion (B, C) et au moins un gestionnaire (MA1, MA2) d'un niveau de gestion (A, B) immédiatement supérieur, des données d'alignement sont transmises par l'agent (AG) au gestionnaire (MA1, MA2), dans lequel
un ou plusieurs messages de requêtes ("M-ACTION Request") demandant de transmettre les données d'alignement étant envoyés par le gestionnaire (MA1, MA2) à l'agent (AG),
le gestionnaire (MA1, MA2) transmettant des informations de corrélation ("managerHandle", 78) en vue d'une association de la requête concernée aux données d'alignement envoyées ensuite par l'agent (AG),
des dispositifs de filtrage (EFD) étant utilisés, qui reçoivent les données de plusieurs gestionnaires (MA1, MA2) et qui laissent passer les données d'alignement en fonction des informations de corrélation ("managerHandle", 78) uniquement au gestionnaire (MA1, MA2) qui a demandé ces données d' alignement,
**caractérisé en ce que**
les dispositifs de filtrage (EFD) extraient par filtrage et en utilisant un réglage du filtrage toutes les données d'alignement à l'aide d'informations d'un champ supplémentaire ("Additional Text") des messages ("M-EVENT-REPORT") qui contiennent les données d'alignement.

2. Procédé selon la revendication 1, dans lequel les données d'alignement qui doivent être alignées lors de l'alignement des données sont des données d'alarme qui concernent en particulier des alarmes actives, des modifications d'état ou des modifications de configuration.

3. Procédé selon les revendications 1 ou 2, dans lequel les informations de corrélation ("managerHandle", 78) sont placées par l'agent (AG) avant la transmission des messages ("M-EVENT-REPORT") qui contiennent les données d'alignement aux dispositifs de filtrage (EFD) dans un champ supplémentaire facultatif ("Additionnal Text") des messages ("M-EVENT-REPORT") qui contiennent les données d'alignement.

4. Procédé selon l'une des revendications précédentes, dans lequel on utilise comme dispositifs de filtrage (EFD) des discriminateurs de transmission d'événement ou des discriminateurs LOG.

5. Procédé selon l'une des revendications 1 à 4, dans lequel le réglage du filtrage d'un gestionnaire (MA1, MA2) qui demande un alignement des données est ramené après l'alignement des données au réglage du filtrage par défaut pour les informations du champ supplémentaire ("Additional Text").

6. Procédé selon l'une des revendications précédentes, dans lequel un réglage du filtrage du dispositif de filtrage (EFD) du gestionnaire (MA1, MA2) qui demande un alignement des données est établi en vue de l'extraction par filtrage de toutes les données d'alignement provenant d'autres gestionnaires (MA1, MA2) dans les informations d'un champ supplémentaire ("Additional Text") de messages ("M-EVENT-REPORT") qui contiennent les données d'alignement.

7. Procédé selon l'une des revendications précédentes, dans lequel tous les agents (AG) qui envoient des données d'alignement transmettent des messages ("M-EVENT-REPORT") qui contiennent des données d'alignement avec l'information de corrélation ("managerHandle", 78) dans un champ supplémentaire aux dispositifs de filtrage (EFD) de tous les gestionnaires (MA1, MA2).

8. Système de communication doté d'un réseau de gestion qui présente au moins deux niveaux de gestion (A, B, C), des gestionnaires (MA1, MA2) et des agents (AG), pour l'alignement des données, avec chez les agents (AG) des moyens pour envoyer des données d'alignement à des gestionnaires (MA1, MA2) d'ordre hiérarchique plus élevé,
dans lequel sont prévus des dispositifs de filtrage (EFD) qui laissent passer uniquement pour le gestionnaire (MA1, MA2) qui a demandé les données d'alignement en fonction d'informations de corrélation ("managerHandle", 78) reçues précédemment par un gestionnaire (MA1, MA2),
**caractérisé en ce que**
les dispositifs de filtrage (EFD) ont un réglage de filtrage qui extrait par filtrage toutes les données d'alignement des messages ("M-EVENT-REPORT") qui contiennent les données d'alignement, à l'aide d'informations d'un champ supplémentaire ("Additional Text").

9. Système de communication selon la revendication 8, dans lequel des dispositifs de réglage des informations de filtrage ou de corrélation ("managerHandle", 78) dans les dispositifs de filtrage (EFD) associés aux agents (AG) sont prévus dans le gestionnaire (MA1, MA2).

10. Système de communication selon les revendications 8 ou 9, dans lequel des dispositifs d'introduction des informations de corrélation ("managerHandle", 78) dans des champs supplémentaires des messages ("M-EVENT-REPORT") qui contiennent des données d'alignement qui doivent être transmises par au moins un dispositif de filtrage (EFD) à un gestionnaire (MA1, MA2) sont prévus chez les agents (AG).

11. Système de communication selon l'une des revendications 8 à 10, dans lequel les dispositifs de filtrage (EFD) sont des discriminateurs de transmission d'événement ou des discriminateurs LOG.
